# DEMANDE DE BREVET EUROPEEN

(11) **EP 1 551 193 A1**
(43) Date de publication de la demande: **06.07.2005**
(21) Numéro de dépôt: 04292867.1
(22) Date de dépôt: 03.12.2004
(51) Int. Cl.: H04Q 7/32

(54) **Procédé de personnalisation automatique d'un terminal mobile en fonction du module d'identification de l'utilisateur et terminal mobile personnalisable**

(30) Priorité: 30.12.2003 FR 0315570
(71) Demandeur: Sagem SA, 75512 Paris Cedex 15 (FR)
(72) Inventeur: Delmas, Gilles, 95520 Osny (FR)
(74) Mandataire: Debay, Yves

(57) **Abrégé**

Le terminal mobile (1) personnalisable comporte une interface matérielle et logicielle de communication (200) avec un module d'identification (SIM) et une mémoire (10) pour stocker dans une première zone (101) un module logiciel de configuration (3) et dans une seconde zone (102) des données de ressource (4), une troisième zone (103) étant prévue pour stocker des données provisoires (40) représentatives d'une pluralité de kits d'opérateur de radiotéléphonie.

Le module de configuration (3) comprend des moyens de génération (20) pour produire dans une partie de la seconde zone (102) des ressources personnalisées selon un des kits d'opérateur de radiotéléphonie. L'invention permet pour les constructeurs de terminaux mobiles de réaliser une personnalisation en fonction du pays, de la langue et de l'opérateur. Les données provisoires (40) peuvent être effacées pour libérer de la mémoire.

## Description

### DOMAINE TECHNIQUE DE L'INVENTION

La présente invention se rapporte au domaine de la configuration des téléphones mobiles. L'invention concerne plus particulièrement un procédé de personnalisation automatique d'un terminal mobile en fonction du module d'identification de l'utilisateur ainsi qu'un terminal mobile personnalisable.

Pour pouvoir être commercialisés dans un grand nombre de pays, les terminaux mobiles tels que les téléphones portables doivent embarquer de plus en plus de données relatives à la personnalisation de l'interface avec l'utilisateur. Pour un constructeur de téléphones portables, il faut ainsi mémoriser avant livraison des données de personnalisation en fonction de la langue du pays destinataire (messages des menus, icônes, dictionnaire de type "T9" pour faciliter la saisie de messages textuels, favoris, etc.) ou de l'opérateur de radiotéléphonie (aspect d'écran, sons, particularités d'ergonomie...).

Cette exigence de personnalisation présente un inconvénient pour la gestion des stocks à une échelle internationale. Les constructeurs ou opérateurs internationaux devant livrer des téléphones dans un pays peuvent difficilement gérer leurs stocks quand ils ont surplus dans un pays et une rupture dans un autre pays.

### ARRIERE-PLAN TECHNOLOGIQUE DE L'INVENTION

Dans l'art antérieur, il est connu par le document WO 00/31992 une méthode de configuration automatique de terminaux cellulaires fixes, permettant de réaliser la configuration d'un terminal lors de sa mise en fonctionnement dans un réseau, par réception de données d'indication de configuration en provenance du réseau de télécommunication. Cet enseignement n'est pas adapté au cas des terminaux mobiles de radiotéléphonie, l'accès au réseau ne pouvant s'effectuer lors de la première mise sous tension s'il n'y a pas une connaissance préalable de l'opérateur de radiotéléphonie. De plus, la capacité de mémoire des terminaux mobiles doit être optimisée et un grand nombre de données de personnalisation est requis.

Il est également décrit dans l'art antérieur, par le document CN1418032, une méthode de distribution dynamique de l'espace mémoire dédié au répertoire de numéros de téléphones et messages courts de type SMS (Short Message Service). L'abonné peut, selon cette méthode, distribuer l'espace mémoire de sa carte SIM (Subscriber Identity Module). Cet enseignement n'est toutefois pas adapté au problème soulevé dans la présente invention, qui se rapporte à la configuration initiale du terminal mobile pour personnaliser l'interface du radiotéléphone avec l'utilisateur selon le pays et l'opérateur de radiotéléphonie.

### DESCRIPTION GENERALE DE L'INVENTION

La présente invention a donc pour objet de supprimer un ou plusieurs des inconvénients de l'art antérieur en définissant un procédé de personnalisation automatique d'un terminal mobile de radiotéléphonie en fonction du module d'identification de l'utilisateur.

A cet effet, l'invention concerne un procédé de personnalisation automatique d'un terminal mobile du type pourvu d'au moins une mémoire non volatile et d'une interface de communication avec un module d'identification d'un utilisateur, la mémoire non volatile du terminal étant notamment distribuée entre une première zone pour stocker au moins une caractéristique d'identification du terminal mobile ainsi qu'un module logiciel de configuration, une seconde zone reprogrammable pour stocker des premières données de ressource et une troisième zone reprogrammable vierge destinée au stockage de données par l'utilisateur, caractérisé en ce qu'il comporte :
- une étape initiale de chargement, dans ladite troisième zone de la mémoire du terminal mobile, de données dites provisoires représentatives d'une pluralité de kits d'opérateur de radiotéléphonie, chaque kit permettant la connexion à un réseau choisi en fonction de l'opérateur et du pays ;
- une étape de lecture par le terminal mobile de données de configuration, les données de configuration étant associées à un des kits d'opérateur de radiotéléphonie à installer, une étape de configuration du terminal étant ensuite réalisée par des moyens de génération à la disposition du module logiciel de configuration pour produire dans une partie de la seconde zone de la mémoire du terminal, à partir desdites données de configuration, une table d'indexation ainsi que des données de personnalisation représentatives du kit d'opérateur de radiotéléphonie à installer et à utiliser lors du redémarrage suivant du terminal mobile.

Selon une autre particularité de l'invention, une étape de première mise en marche du terminal mobile, comprenant la mise sous tension du terminal mobile et l'établissement d'une connexion physique du module d'identification de l'utilisateur avec le terminal, précède l'étape de lecture, les données de configuration étant fournies par le module d'identification.

Selon une autre particularité de l'invention, les ressources personnalisées sont extraites parmi les données provisoires et comprennent au moins une table d'indexation ainsi que des données de personnalisation associées au kit d'opérateur de radiotéléphonie.

Selon une autre particularité de l'invention, les données de configuration contenues dans le module d'identification comprennent des données représentatives d'une langue et d'un pays.

Ainsi de manière avantageuse, l'invention met à profit la zone de mémoire permanente vierge du terminal mobile destinée au stockage des données de l'utilisateur correspondant par exemple aux messages multimédia MMS, images, sonneries, sons, vidéos, etc. Les terminaux mobiles les plus récents offrent de plus en plus de fonctionnalités multimédia et disposent d'une mémoire permanente initialement vierge d'au moins un mégaoctet qui permet de pré-charger les ressources nécessaires à la personnalisation pour différents pays ou opérateurs (messages des menus, fontes, icônes, écran de veille, sonneries, thèmes, dictionnaires "T9").

Selon une autre particularité de l'invention, une étape d'effacement de tout ou partie des données provisoires est réalisée par des moyens d'effacement du terminal mobile après l'étape de configuration.

Ainsi, de manière avantageuse, les ressources non utilisées peuvent être effacées et la zone mémoire libérée pour servir d'espace utilisateur.

Selon une autre particularité, ladite première sous-étape de lecture est réalisée par utilisation d'au moins un programme de configuration sélectionné parmi une pluralité de programmes de configuration du module de configuration, chacun des programmes de configuration étant associé à un opérateur de radiotéléphonie.

Selon une autre particularité, une sous-étape intermédiaire de sélection du programme de configuration est réalisée de manière automatique lors de l'étape de configuration, ledit programme de configuration étant déclenché sélectivement en fonction d'une information de sélection d'un kit d'opérateur de radiotéléphonie transmise par ledit module d'identification.

Selon une autre particularité, une étape de validation par l'utilisateur de l'opérateur, de la langue et du pays est réalisée à la fin de l'étape de configuration.

Selon une autre particularité, le programme de configuration sélectionné commande l'extraction des données correspondant au kit d'opérateur de radiotéléphonie indiqué grâce au module d'identification, les données ainsi extraites étant recopiées par les moyens de génération dans la seconde zone de la mémoire.

Selon une autre particularité, des données d'accès à des données équivalentes des données effacées sont conservées dans une partie de la seconde ou de la troisième zone de la mémoire.

Selon une autre particularité, les données de configuration sont fournies par un appareil communiquant avec une interface de connectivité locale du terminal mobile.

Un autre objet de l'invention est de supprimer un ou plusieurs des inconvénients de l'art antérieur en définissant un terminal mobile personnalisable apte à être configuré automatiquement lors de la première insertion d'un module d'identification de l'utilisateur.

A cet effet, l'invention propose un terminal mobile personnalisable comportant une interface matérielle et logicielle de communication avec un module d'identification d'un utilisateur, au moins une mémoire non volatile permettant de stocker dans une première zone au moins une caractéristique d'identification du terminal ainsi qu'un module logiciel de configuration et dans une seconde zone reprogrammable des premières données de ressource, caractérisé en ce qu'il comporte dans ladite mémoire une troisième zone effaçable stockant des données provisoires représentatives d'une pluralité de kits d'opérateur de radiotéléphonie et en ce que le module de configuration dispose de moyens de génération pour produire dans une partie de la seconde zone des ressources personnalisées selon au moins un desdits kits d'opérateur de radiotéléphonie, les données ainsi produites formant des secondes données de ressource mémorisées dans la seconde zone.

Selon une autre particularité, les données provisoires, d'où dont sont extraites les ressources personnalisées, comprennent pour chaque kit d'opérateur de radiotéléphonie au moins une table d'indexation ainsi que des données de personnalisation.

Selon une autre particularité, le module de configuration comporte une pluralité de programmes de configuration chacun associé à un opérateur de radiotéléphonie et est relié à ladite interface de communication avec le module d'identification de l'utilisateur pour permettre de déclencher sélectivement au moins un des programmes de configuration en fonction d'une information de sélection d'un kit d'opérateur de radiotéléphonie transmise par ledit module d'identification, le module de configuration déclenchant d'une part, des moyens de génération pour permettre la formation desdites secondes données de ressource, et d'autre part, des moyens d'effacement du terminal mobile pour permettre d'effacer de la troisième zone les données provisoires.

Selon une autre particularité, le terminal selon l'invention comprend un logement adapté pour recevoir un module d'identification sous la forme d'une carte à puce de type SIM ou USIM (Universal Subscriber Identity Module).

Selon une autre particularité, les données de personnalisation comprennent des menus, fontes et dictionnaire de type "T9" ou autre technologie pour une langue.

Selon une autre particularité, la mémoire stocke des adresses d'accès à un serveur permettant le chargement de données représentatives d'un kit d'opérateur de radiotéléphonie ou d'un kit de langage.

Selon une autre particularité, le terminal mobile comprend une interface de connectivité locale pour recevoir des données de configuration fournies par un appareil de communication, le module de configuration étant conçu pour déclencher sélectivement au moins un programme de configuration associé à un opérateur de radiotéléphonie en fonction d'une information de sélection d'un kit d'opérateur de radiotéléphonie transmise à travers la dite interface de connectivité locale.

L'invention, avec ses caractéristiques et avantages, ressortira plus clairement à la lecture de la description faite en référence aux dessins annexés dans lesquels :
- la figure 1 représente un schéma fonctionnel d'un terminal mobile personnalisable selon l'invention,
- la figure 2 illustre schématiquement un exemple de distribution de la mémoire d'un terminal mobile après personnalisation,
- la figure 3 représente un logigramme des étapes d'un mode de réalisation du procédé selon l'invention.

### DESCRIPTION DES MODES DE REALISATION PREFERES DE L'INVENTION

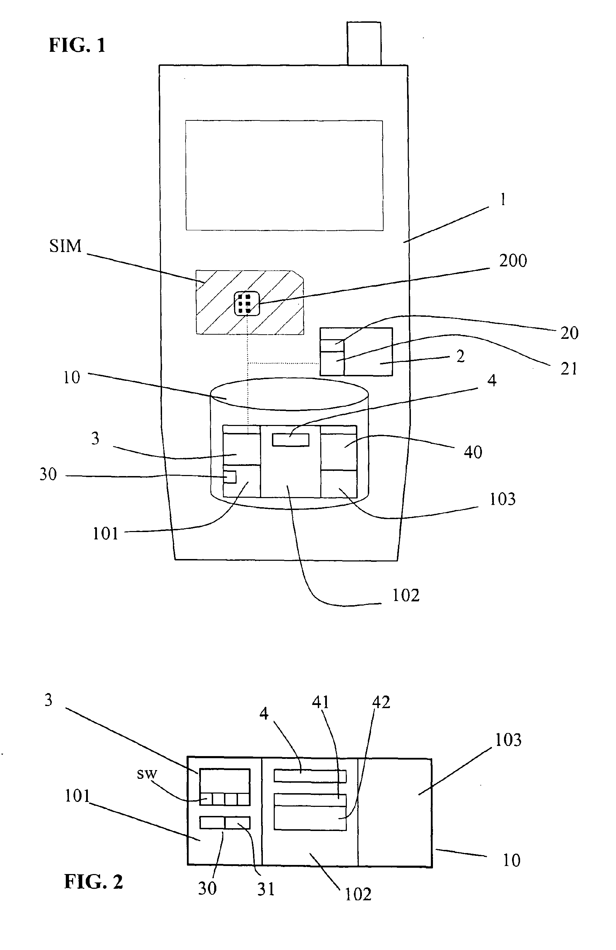

L'invention va être à présent décrite en référence aux figures 1 et 2.

Le terminal mobile (1) représenté à la figure 1 peut être un téléphone portable d'un type classique ou un appareil de communication analogue nécessitant un module d'identification (SIM) de l'utilisateur pour fonctionner. Ce module d'identification peut consister par exemple en une carte à puce de type SIM ou USIM. Dans le mode de réalisation préféré de l'invention, le module d'identification (SIM) est incorporable dans le corps du terminal mobile (1). L'utilisateur du terminal mobile (1) est généralement abonné à un opérateur gérant un réseau de télécommunication. Dans tout ce qui suit, on envisagera le cas nullement limitatif d'un terminal mobile à configurer pour un unique opérateur de radiotéléphonie ou pour un unique groupe rassemblant plusieurs opérateurs.

De manière classique, le terminal mobile (1) comporte une interface matérielle et logicielle de communication (200) avec le module d'identification (SIM) de l'utilisateur. Un logement adapté est prévu dans le corps du terminal mobile (1) pour recevoir le module d'identification (SIM). Le terminal mobile (1) comprend au moins une mémoire (10) non volatile et une unité de traitement (2) munie par exemple d'un microprocesseur, microcontrôleur ou circuit équivalent. Cette mémoire (10) peut être du type reprogrammable. Dans le mode de réalisation de la figure 1, la mémoire (10) est du type flash ou analogue et permet de stocker dans une première zone (101) au moins une caractéristique d'identification (31) du terminal (1) ainsi qu'un module logiciel de configuration (3). Cette première zone (101) de la mémoire (10) est par exemple une section de la mémoire (10) servant à stocker des données de façon permanente. Une caractéristique d'identification telle que le code IMEI (International Mobile Equipment Identity) est incluse parmi les données permanentes (30) stockées dans cette zone (101). On comprend que ladite première zone (101) de mémoire peut aussi correspondre à une unité de mémorisation non reprogrammable. La mémoire (10) du terminal mobile (1) comporte en outre une seconde zone (102) pour stocker notamment des premières données de ressource (4) et une troisième zone (103) vierge destinée au stockage de données par l'utilisateur. Les seconde et troisième zones (102, 103), correspondant par exemple chacune à un espace de stockage d'une mémoire reprogrammable, doivent être reprogrammables. Selon l'invention, la troisième zone (103), effaçable, permet de stocker des données provisoires (40) représentatives d'une pluralité de kits d'opérateur de radiotéléphonie. Chaque kit peut permettre d'établir la connexion à un réseau choisi en fonction de l'opérateur et du pays.

L'unité de traitement (2) est dotée de moyens de génération (20) à la disposition du module de configuration (3) et agencés pour produire dans une partie de la seconde zone (102) des ressources personnalisées selon au moins un des kits d'opérateur de radiotéléphonie. Ces ressources personnalisées comprennent des données de personnalisation (42) extraites parmi les données provisoires (40). Les moyens de génération (20) permettent de produire également au moins une table d'indexation (41). Dans des variantes de réalisation différentes du mode de réalisation de la figure 1, les moyens de génération peuvent aussi correspondre à une fonctionnalité du module logiciel de configuration (3). La production de données par ces moyens de génération (20) peut résulter d'une opération de recopiage dans une partie de la seconde zone (102) des données pertinentes stockées parmi les données provisoire (40) dans la troisième zone (103) de la mémoire.

Les moyens de génération (20) produisent ainsi des secondes données de ressource (41, 42) mémorisées dans la seconde zone (102), comme illustré à la figure 2. A la différence des premières données de ressource (4), les secondes données de ressource apportent une personnalisation à l'interface du terminal mobile (1) avec l'utilisateur. Dans le mode de réalisation préféré de l'invention, les données de personnalisation (42), pouvant être de taille variable selon le kit d'opérateur choisi, sont accédées par indexation au moyen de la table d'indexation (41). Comme représenté à la figure 2, cette table d'indexation (41) se trouve à une adresse spécifique, par exemple au début des secondes données de ressource générées par les moyens de génération (20).

Il est possible de mettre en commun des ressources pour des opérateurs différents appartenant à un même groupe. En effet, il suffit que les kits d'opérateur soient générés en tenant compte d'un groupe de ressources communes. Ces ressources communes sont par exemple relatives aux sons, images, dictionnaire de type "T9" ou autre technologie, etc.

Comme le montre la figure 2, le module de configuration (3) comprend une pluralité de programmes de configuration (SW) chacun associé à un opérateur de radiotéléphonie de façon à permettre l'établissement d'une configuration automatique lorsque le module d'identification (SIM) communique avec le terminal mobile (1). Lors de la première connexion du module d'identification au terminal mobile (1), le module d'identification (SIM) fournit une information de sélection d'un kit d'opérateur de radiotéléphonie. Cette information de sélection transmise par le module d'identification (SIM) permet de déclencher sélectivement un ou éventuellement plusieurs des programmes de configuration (SW) du module de configuration (3). Dans le cas d'une carte de type SIM ou équivalent, c'est donc l'établissement d'une connexion physique de la carte avec le terminal mobile (1) pour la première fois qui va déclencher automatiquement la personnalisation. Le module de configuration (3), est non seulement en relation par l'interface de communication (200) avec le module d'identification (SIM), mais déclenche également en premier lieu les moyens de génération (20) pour permettre la formation desdites secondes données de ressource (41, 42) par recopie des données correspondant à l'opérateur dans la zone de ressource du terminal (1) et en second lieu, des moyens d'effacement (21) du terminal mobile (1) pour permettre d'effacer de la troisième zone (101) les données provisoires (40). Les moyens d'effacement (21) sont par exemple compris dans l'unité de traitement (2), comme représenté à la figure 1.

Les données de configuration mémorisées dans le module d'identification (SIM), composées par exemple de ladite information de sélection ou de données équivalentes représentatives d'au moins un desdits kits d'opérateur de radiotéléphonie, comprennent des données représentatives d'une langue et d'un pays. Les données de personnalisation (42) pourront être naturellement différentes pour un même opérateur en fonction de la langue et/ou du pays auquel le module d'identification (SIM) se réfère. On comprend que lesdites données de configuration peuvent simplement correspondre, dans le cas d'une carte SIM, à des données permettant l'identification de l'opérateur gestionnaire de l'abonnement et du réseau ainsi que la langue préférée. Le choix du kit à installer peut en effet être déduit de ces données.

Dans un second mode de réalisation, les données de configuration peuvent provenir d'un appareil de communication externe et non pas d'un module d'identification (SIM) de l'utilisateur. Les données de configuration sont par exemple fournies par un appareil communiquant avec une interface de connectivité locale du terminal mobile (1). L'information de sélection peut être transmise via une prise de fond de poste du terminal mobile (1) ou une autre interface de connexion physique ou encore par une interface de communication à courte distance, par exemple infrarouge ou bluetooth. De même qu'avec le mode de réalisation susmentionné, le module de configuration (3) permet de déclencher sélectivement au moins un programme de configuration (SW) associé à un opérateur de radiotéléphonie en fonction d'une information de sélection d'un kit d'opérateur de radiotéléphonie transmise à travers la dite interface de connectivité locale. Ainsi, la personnalisation peut être effectuée par l'utilisateur avec le module d'identification (SIM) ou bien, selon le même principe, avant l'intervention de l'utilisateur, par exemple par l'opérateur de radiotéléphonie ou le constructeur de terminal mobile (1). L'appareil de communication peut être un ordinateur doté d'un connecteur adapté pour permettre la transmission de données au terminal mobile (1).

Dans une variante de réalisation pour les terminaux mobiles (1) disposant de fonctionnalités et de capacités adaptées pour accéder un site WAP ou Internet via une communication à commutation de circuit ou de paquet ou un mode de transmission au moins aussi performant, une ou plusieurs adresses URL (Uniform Resources Location) référençant un fichier informatique peuvent être conservées dans la mémoire (10). De telles adresses constituent un accès à un serveur permettant le chargement d'un autre kit opérateur ou d'un autre kit de langage. Des données d'accès à des données équivalentes des données effacées peuvent être conservées dans une partie de la seconde (102) ou de la troisième (103) zone de la mémoire (10), par exemple juste avant l'effacement effectif des données provisoires (40). Il peut être aussi envisagé que les adresses de type URL soient mémorisées initialement et conservées parmi les données de ressource permanentes (30) ou encore parmi lesdites premières données de ressource (4). On comprend que le constructeur du terminal (1) peut stocker l'adresse URL de fichiers de données équivalentes aux données provisoires pour laisser à l'utilisateur la possibilité de sélectionner une autre langue. Le terminal mobile (1) doit pour cela télécharger les ressources strictement nécessaires à l'aide de pointeurs tels qu'une adresse URL spécifique au type de données recherchées. Les fonctionnalités offertes par le protocole WAP (Wireless Application protocol) permettent de réaliser un changement de configuration.

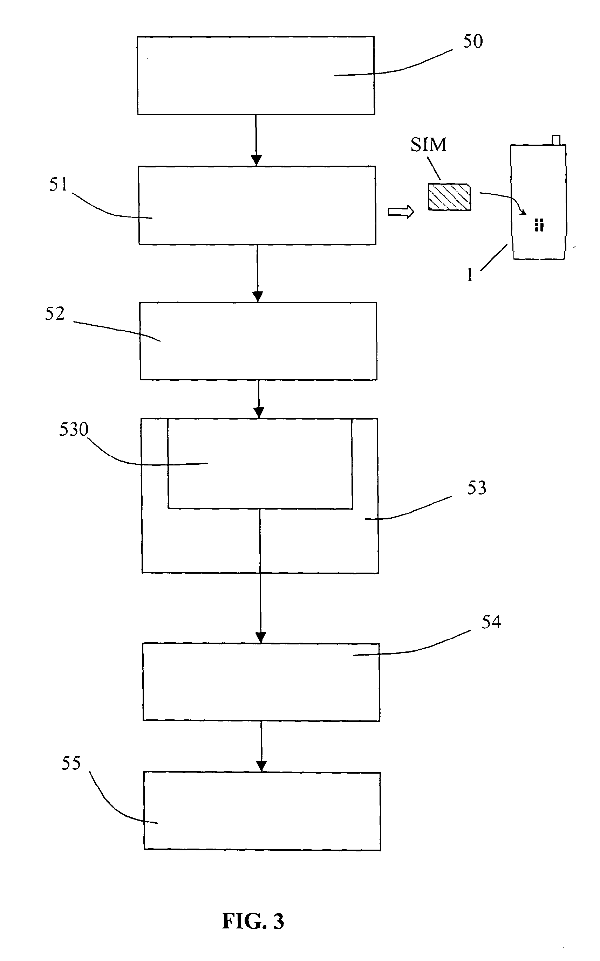

L'invention va être à présent décrite en référence à la figure 3.

Le procédé selon l'invention débute avec une étape initiale (50) de chargement, dans ladite troisième zone (103) de la mémoire (10) du terminal mobile (1), des données provisoires (40), comme représenté à la figure 3. Ces données provisoires (40) sont chargées par exemple par le constructeur de terminaux mobiles (1) et peuvent correspondre à un grand nombre d'opérateurs de radiotéléphonie exerçant dans différents pays.

L'étape suivante est l'étape (51) de première mise en marche, qui comprend la mise sous tension du terminal mobile et l'établissement d'une connexion physique du module d'identification (SIM) de l'utilisateur avec le terminal mobile (1). Typiquement, cette étape se produit lors de la première utilisation du terminal mobile (1) avec un module d'identification (SIM) tel qu'une carte SIM ou USIM.

La configuration, qui découle de l'insertion de la carte SIM ou de l'opération similaire réalisée par un module d'identification (SIM) de l'utilisateur, est particulièrement originale dans le procédé de l'invention dans la mesure où les données de configuration lues sur la carte SIM vont permettre de personnaliser automatiquement le terminal mobile (1) pré-chargé lors de l'étape initiale (30). Dans un mode de réalisation de l'invention, les champs à lire dans la carte SIM pour la configuration automatique du terminal mobile (1) sont le code d'identifiant IMSI (International Mobile Subscriber Identity) permettant d'identifier l'opérateur de radiotéléphonie et des données représentatives d'une préférence de langue. Ce dernier champ peut être pré-rempli par l'opérateur et modifié par l'utilisateur.

Comme représenté à la figure 3, l'étape (53) de configuration est précédée d'une étape (52) de lecture utilisant le module de configuration pour lire les données de configuration mémorisées dans le module d'identification (SIM) tel que la carte SIM. Ces données de configuration correspondent à des informations permettant notamment d'identifier le kit d'opérateur de radiotéléphonie à installer. Lors de la première reconnaissance du module d'identification (SIM), le programme de configuration (SW) correspondant aux données de configuration lues lors de l'étape (52) de lecture va être sélectionné lors d'une sous-étape (530) de sélection. La sélection du programme de configuration (SW) à activer dans le module de configuration (3) est réalisée de manière automatique lors de la connexion du module d'identification (SIM) au terminal mobile (1), en fonction d'une information de sélection d'un kit d'opérateur de radiotéléphonie transmise par le module d'identification (SIM).

Le programme de configuration (SW) va dès lors être lancé pour déclencher les moyens de génération (20) de l'unité de traitement (2) du terminal mobile (1). Ces moyens de génération (20), contrôlés par le programme de configuration (SW), vont extraire les données souhaitées en fonction des données de configuration. Le programme de configuration (SW) va commander en effet l'extraction de certaines des données provisoires (40) correspondant au kit d'opérateur de radiotéléphonie identifié grâce au module d'identification (SIM). Ces données extraites peuvent être recopiées par les moyens de génération (20) dans la seconde zone (102) de la mémoire (10). Le programme de configuration (SW) permet également d'initier une mise à jour des tables d'index servant à l'adressage de ces données recopiées.

Autrement dit, l'étape (53) de configuration est réalisée par les moyens de génération (20) pour produire dans une partie de la seconde zone (102) une table d'indexation (41) ainsi que des données de personnalisation (42) représentatives dudit kit d'opérateur de radiotéléphonie. Selon les fonctionnalités du terminal, le fonctionnement opérationnel des données du kit d'opérateur installé est obtenu soit immédiatement, soit après un redémarrage du terminal mobile (1).

Le procédé selon l'invention comprend avantageusement une étape (55) d'effacement des données provisoires (40) réalisée par des moyens d'effacement (21) du terminal mobile (1) après l'étape (53) de configuration. Cela permet de décharger de la troisième zone (103) de la mémoire de tout ou partie des données provisoires (40) chargées initialement et devenues inutiles une fois la personnalisation accomplie. Une étape (54) de validation de l'opérateur, de la langue et du pays peut être réalisée par l'utilisateur à la fin de l'étape (53) de configuration et avant l'étape d'effacement, pour permettre de modifier si besoin la personnalisation.

En variante, les données provisoires (40) peuvent être conservées en vue d'une éventuelle nouvelle personnalisation, l'utilisateur décidant de l'effacement de ces données provisoires (40), par exemple quand il veut utiliser la totalité de la troisième zone (103) de la mémoire (10). Il peut être envisagé d'effacer seulement certains kits et pas d'autres, par une sélection avant effacement.

L'un des avantages de l'invention réside dans sa simplicité de mise en oeuvre, la configuration étant rapide et automatique. De plus, le constructeur des terminaux mobiles peut réaliser une personnalisation en fonction du pays, de la langue et de l'opérateur de radiotéléphonie. Une segmentation des livraisons par pays / langue / opérateur est ainsi permise grâce à l'invention.

L'invention permet avantageusement d'effacer des données relatives à des langues inutilisées, par exemple les menus, fontes, dictionnaires de type "T9", lorsque le terminal est préalablement chargé avec des données de configuration pour tout un groupe de pays. Typiquement, pour 9 langues d'Europe occidentale initialement chargées, le gain en mémoire pour le dictionnaire "T9" peut être de l'ordre de 0,5 mégaoctet.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de personnalisation automatique d'un terminal mobile (1) du type pourvu d'au moins une mémoire (10) non volatile et d'une interface de communication (200) avec un module d'identification (SIM) d'un utilisateur, la mémoire non volatile (10) du terminal mobile (1) étant notamment distribuée entre une première zone (101) pour stocker au moins une caractéristique d'identification du terminal mobile (1) ainsi qu'un module logiciel de configuration (3), une seconde zone reprogrammable (102) pour stocker des premières données de ressource (4) et une troisième zone reprogrammable (103) vierge destinée au stockage de données par l'utilisateur, **caractérisé en ce qu'**il comporte :
- une étape initiale (50) de chargement, dans ladite troisième zone (103) de la mémoire du terminal mobile (1), de données dites provisoires (40) représentatives d'une pluralité de kits d'opérateur de radiotéléphonie, chaque kit permettant la connexion à un réseau choisi en fonction de l'opérateur et du pays ;
- une étape (52) de lecture par le terminal mobile (1) de données de configuration, les données de configuration étant associées à un des kits d'opérateur de radiotéléphonie à installer, une étape (53) de configuration du terminal étant ensuite réalisée par des moyens de génération (20) à la disposition du module logiciel de configuration (3) pour produire dans une partie de la seconde zone (102) de la mémoire (10) du terminal (1), à partir desdites données de configuration, des ressources personnalisées selon le kit d'opérateur de radiotéléphonie à installer.

2. Procédé selon la revendication 1, dans lequel une étape (51) de première mise en marche du terminal mobile (1), comprenant la mise sous tension du terminal mobile et l'établissement d'une connexion physique du module d'identification (SIM) de l'utilisateur avec le terminal (1), précède l'étape de lecture (52), les données de configuration étant fournies par le module d'identification (SIM).

3. Procédé selon la revendication 1 ou 2, dans lequel les ressources personnalisées sont extraites parmi les données provisoires (40) et comprennent au moins une table d'indexation (41) ainsi que des données de personnalisation (42) associées au kit d'opérateur de radiotéléphonie.

4. Procédé selon la revendication 2 ou 3, dans lequel les données de configuration contenues dans le module d'identification (SIM) comprennent des données représentatives d'une langue et d'un pays.

5. Procédé selon l'une quelconque des revendications 1 à 4, dans lequel une étape (55) d'effacement de tout ou partie des données provisoires (40) est réalisée par des moyens d'effacement (21) du terminal mobile (1) après l'étape (53) de configuration.

6. Procédé selon l'une des revendications 1 à 5, dans lequel ladite étape (52) de lecture est réalisée par utilisation d'au moins un programme de configuration (SW) sélectionné parmi une pluralité de programmes de configuration du module de configuration (3), chacun des programmes de configuration (SW) étant associé à un opérateur de radiotéléphonie.

7. Procédé selon la revendication 6, dans lequel une sous-étape (530) de sélection du programme de configuration (SW) est réalisée de manière automatique lors de l'étape de configuration (53), ledit programme de configuration (SW) étant déclenché sélectivement en fonction d'une information de sélection d'un kit d'opérateur de radiotéléphonie transmise par ledit module d'identification (SIM).

8. Procédé selon l'une quelconque des revendications 1 à 7, dans lequel une étape (54) de validation par l'utilisateur de l'opérateur, de la langue et du pays est réalisée à la fin de l'étape (53) de configuration.

9. Procédé selon l'une quelconque des revendications 6 à 8, dans lequel le programme de configuration (SW) sélectionné commande l'extraction des données correspondant au kit d'opérateur de radiotéléphonie indiqué grâce au module d'identification (SIM), les données ainsi extraites étant recopiées par les moyens de génération (20) dans la seconde zone (102) de la mémoire (10).

10. Procédé selon l'une quelconque des revendications 5 à 9, dans lequel des données d'accès à des données équivalentes des données effacées sont conservées dans une partie de la seconde (102) ou de la troisième (103) zone de la mémoire (10).

11. Procédé selon la revendication 1, dans lequel les données de configuration sont fournies par un appareil communiquant avec une interface de connectivité locale du terminal mobile.

12. Terminal mobile (1) personnalisable comportant une interface matérielle et logicielle de communication (200) avec un module d'identification (SIM) d'un utilisateur, au moins une mémoire (10) non volatile permettant de stocker dans une première zone (101) au moins une caractéristique d'identification du terminal (1) ainsi qu'un module logiciel de configuration (3) et dans une seconde zone reprogrammable (102) des premières données de ressource (4), **caractérisé en ce qu'**il comporte dans ladite mémoire (10) une troisième zone (103) effaçable stockant des données provisoires (40) représentatives d'une pluralité de kits d'opérateur de radiotéléphonie et **en ce que** le module de configuration (3) dispose de moyens de génération (20) pour produire dans une partie de la seconde zone (102) des ressources personnalisées selon au moins un desdits kits d'opérateur de radiotéléphonie, les données ainsi produites formant des secondes données de ressource (41, 42) mémorisées dans la seconde zone (102).

13. Terminal mobile (1) personnalisable selon la revendication 12, dans lequel les données provisoires (40), d'où dont sont extraites les ressources personnalisées, comprennent pour chaque kit d'opérateur de radiotéléphonie au moins une table d'indexation (41) ainsi que des données de personnalisation (42).

14. Terminal mobile (1) personnalisable selon la revendication 12 ou 13, dans lequel le module de configuration (3) comporte une pluralité de programmes de configuration (SW) chacun associé à un opérateur de radiotéléphonie et est relié à ladite interface de communication (200) avec le module d'identification (SIM) de l'utilisateur pour permettre de déclencher sélectivement au moins un des programmes de configuration (SW) en fonction d'une information de sélection d'un kit d'opérateur de radiotéléphonie transmise par ledit module d'identification (SIM), le module de configuration (3) déclenchant d'une part, des moyens de génération (20) pour permettre la formation desdites secondes données de ressource (41, 42), et d'autre part, des moyens d'effacement (21) du terminal mobile (1) pour permettre d'effacer de la troisième zone (101) les données provisoires (40).

15. Terminal mobile (1) personnalisable selon l'une quelconque des revendications 12 à 14, **caractérisé en ce qu'**il comprend un logement adapté pour recevoir un module d'identification (SIM) sous la forme d'une carte à puce de type SIM ou USIM.

16. Terminal mobile (1) personnalisable selon l'une quelconque des revendications 13 à 15, dans lequel les données de personnalisation (42) comprennent des menus, fontes et dictionnaire de type "T9" ou autre technologie pour une langue.

17. Terminal mobile (1) personnalisable selon l'une quelconque des revendications 11 à 16, **caractérisé en ce que** la mémoire (10) stocke des adresses d'accès à un serveur permettant le chargement de données représentatives d'un kit d'opérateur de radiotéléphonie ou d'un kit de langage.

18. Terminal mobile (1) personnalisable selon la revendication 12 ou 13, comprenant une interface de connectivité locale pour recevoir des données de configuration fournies par un appareil de communication, le module de configuration (3) étant conçu pour déclencher sélectivement au moins un programme de configuration (SW) associé à un opérateur de radiotéléphonie en fonction d'une information de sélection d'un kit d'opérateur de radiotéléphonie transmise à travers la dite interface de connectivité locale.
